# EUROPÄISCHE PATENTSCHRIFT

(11) **EP 1 759 794 B1**
(45) Veröffentlichungstag und Bekanntmachung des Hinweises auf die Patenterteilung: **19.10.2011**
(21) Anmeldenummer: 06018241.7
(22) Anmeldetag: 31.08.2006
(51) Int. Cl.: B23B 31/18, B23B 31/30

(54) **Spannfutter mit Kräfteausgleich, Spannvorrichtung und Verwendung**
Force balancing chuck, chuck device and use
Mandrin de serrage avec équilibrage des forces, appareil de serrage et utilisation

(30) Priorität: 01.09.2005 DE 102005041580
(43) Veröffentlichungstag der Anmeldung: 07.03.2007
(73) Patentinhaber: Zwiesel Kristallglas AG, 94227 Zwiesel (DE)
(72) Erfinder: Lesche, Klaus, 94259 Kirchberg (DE); Gruber, Alois, Verstorben (DE); Heller, Kurt, 94258 Frauenau (DE)
(74) Vertreter: Müller-Boré & Partner Patentanwälte

(56) Entgegenhaltungen:
- EP-A- 0 201 756
- EP-A- 0 415 040
- WO-A-2004/048283
- DE-A1- 3 400 082
- DE-A1- 3 524 578
- GB-A- 1 112 204
- JP-A- 60 207 705
- JP-A- 2005 095 996
- US-A- 2 400 755
- US-A- 2 794 648
- US-A- 3 751 053
- US-A- 3 927 873
- US-B1- 6 354 606

## Beschreibung

Die Erfindung betrifft ein Spannfutter mit Kräfteausgleich zum Einspannen von Werkstücken, um die Werkstücke drehend zu bearbeiter, gemäß dem Oberbegriff des Anspruch, 1. Ein solches Spannfutter ist ans der US-A- 3 715 053 Schannt. Die Erfindung Schrifft auch eine Spannvorrichrung mit einem solchen Spannfutter, und die Verwendung eines solchen Spannfutters oder einer solchen Spannvorrichtung.

Beim Einspannen eines Werkstücks bzw. Drehkörpers in ein herkömmliches Spannfutter treten unterschiedlich große Spannungen in dem Werkstück auf, wenn eingespannte Abschnitte des Werkstücks Abmessungsabweichungen aufweisen, beispielsweise aufgrund von Fertigungstoleranzen. Diese unterschiedlich großen Spannungen in dem Werkstück können zu Fehlern bei der Bearbeitung des Werkstücks führen, insbesondere bei Werkstücken, die auf derartige Spannungsunterschiede empfindlich reagieren, wie beispielsweise Gläser. Bisher in der Fachwelt bekannten Spanngreifmechanismen leiten bei gegenüberliegender Einspannung von nicht konzentrischen und nicht koaxialen Spannumfängen Zwangskräfte in den zu spannenden Drehkörper ein.

US-A-3 751 053 offenbart ein Spannfutter mit Zentrier- und Ausgleichsbacken mit zwei axial beweglichen Tauchkolben, die mit einem Satz Zentrierbacken bzw. einem Satz Ausgleichsbacken wirkverbunden sind.

US-B1-6 354 606 offenbart eine Spannfutteradapterbaugruppe und ein korrespondierendes Verfahren zum Umwandeln eines fixen Spannfutters in ein Ausgleichsspannfutter mit einem hydraulischen Zylinder.

US-A-2 794 648 beschreibt ein Ausgleichsspannfutter mit einem konischen Nockenring.

US-A-2 400 755 beschreibt ein Ausgleichsspannfutter mit einem an einem Zentrierstift gelagerten Ausgleichselement.

DE 35 24 578 A1 offenbart eine Greifvorrichtung mit Winkelhebein, die mit einem ihrer freien Enden in ein Fußteil von Greiferbacken eingreifen.

US-A-3 927 873 offenbart ein selbstzentrierendes Spannfutter mit drei Spannbacken und drei Zentrierbacken.

Die Aufgabe der Erfindung besteht somit in der Vermeidung bzw. Verhinderung von Bearbeitungsfehlern an einem Werkstück aufgrund von Spannungsunterschieden in dem Werkstück beim Einspannen des Werkstücks in ein Spannfutter.

Diese Aufgabe wird durch ein Spannfutter mit den Merkmalen nach Anspruch 1, und eine Spannvorrichtung mit den Merkmalen nach Anspruch 15 gelöst. Vorteilhafte Weiterbildungen sind in den abhängigen Ansprüchen definiert. Vorzugsweise wird ein derartiges Spannfutter und eine derartige Spannvorrichtung bei der Glasbearbeitung eingesetzt.

Das erfindungsgemäße Spannfutter zum drehbaren Einspannen eines Werkstücks hat eine Vielzahl von Spannbacken, die zum Anziehen des Spannfutters mit einem Betätigungsglied wirkverbunden sind, wobei ein Ausgleichselement zwischen die Spannbacken und das Betätigungsglied zum Kräfteausgleich zwischengesetzt ist, so dass die Spannbacken mit im wesentlichen derselben Kraft auf das Werkstück einwirken, wobei an einem axialen Ende des Spannfutters eine Ausgleichsplatte zum axialen Anlegen eines Werkstücks angeordnet ist, wobei die Ausgleichsplatte um einen vorgegebenen Winkel schwenkbar angeordnet ist, um Fertigungstoleranzen einer axialen Anlagefläche des Werkstücks auszugleichen, und die Au^{g}gleichsplatte über einen unten liegenden Ausricht- und Zentrierkonus aufgehängt ist und oberseitig mit einem sphärischen Drucklager versehen ist, so dass die Ausgleichsplatte in der offenen Stellung des Spannfutters sich über ihre Gewichtskraft an dem Ausricht- und Zentrierkonus selbsttätig zentriert und in ihre Ausgangslage zurückkehrt.

Der erfindungsgemäße Spanngreifmechanismus ermöglicht es, einen bereits am Umfang an einer Position A eingespannten Drehkörper, unabhängig von seiner Lage im Raum, an einer gegenüberliegenden Position B oder einer beliebigen anderen Position ebenfalls am Umfang einzuspannen, ohne das Auftreten von Zwangskräften von B zu A. Dadurch kann eine Dreh- oder Winkelbewegung gezielt in den Drehkörper eingeleitet werden, um den Drehkörper an seinem Umfang bzw. Umfangsrand mit Werkzeugen zu behandeln und/oder zu bearbeiten.

Erfindungsgemäß ist an einem axialen Ende des Spannfutters eine Ausgleichsplatte zum axialen Anlegen eines Werkstücks angeordnet, wobei die Ausgleichsplatte um einen vorgegebenen Winkel schwenkbar angeordnet ist, um Fertigungstoleranzen einer axialen Anlagefläche des Werkstücks auszugleichen.

Erfindungsgemäß zentriert sich die Ausgleichsplatte in der offenen Stellung des Spannfutters über ihre Gewichtskraft an einem Ausricht- und Zentrierkonus selbsttätig und kehrt in ihre Ausgangslage zurück.

Vorzugsweise sind drei Spannbacken vorgesehen, da eine Ebene durch drei Punkte bestimmt ist. Mehr als drei Spannbacken würden somit eine Werkstücklage normalerweise überdefinieren. Jedoch können in Abhängigkeit von der Form des Werkstücks auch mehr als drei Spannbacken angeordnet sein.

Vorzugsweise weist das Betätigungsglied einen stangenförmigen Körper auf und das Ausgleichselement weist vorzugsweise eine an dem Betätigungsglied angebrachte Taumelscheibe auf, die gegenüber dem Betätigungsglied um einen vorgegebenen Winkel schwenkbar ist.

Vorzugsweise ist das Betätigungsglied zum Anziehen des Spannfutters axial bewegbar, um einen Betätigungsabschnitt der Spannbacken im wesentlichen in einer axialen Richtung zu bewegen.

Vorzugsweise ist ein Betätigungsabschnitt der Spannbacken in einer radialen Nut des Ausgleichselements geführt.

Vorzugsweise weisen die Spannbacken einen am Umfang des Spannfutters schwenkbar gelagerten Hebel auf, dessen Schwenkachse im wesentlichen tangential zu dem Spannfutter angeordnet ist.

Vorzugsweise ist die Taumelscheibe über ein Kugelgelenk an dem Betätigungsglied koaxial gelagert.

Vorzugsweise ist eine Lagerung des Ausgleichselements abgedichtet, vorzugsweise über einen Faltenbalg.

In einer bevorzugten Ausführungsform weist das Ausgleichselement eine Vielzahl von pneumatischen oder hydraulischen Zylindern auf, die konfiguriert sind, um jeweils einen Betätigungsabschnitt der Spannbacken mit demselben Druck zu beaufschlagen, so daß jeder Betätigungsabschnitt mit derselben Kraft betätigbar ist. Demgemäß ist das Betätigungsglied als pneumatische oder hydraulische Ansteuerung ausgeführt. Da die Zylinder aller Spannbacken mit jeweils demselben Druck/Unterdruck beaufschlagt werden, wirkt jeweils dieselbe Kraft auf alle Spannbacken, so dass ein Kräfteausgleich bewirkt wird.

Vorzugsweise weist der Betätigungsabschnitt der Spannbacken jeweils eine Gleiteinrichtung, beispielsweise in der Gestalt einer Rolle, auf, um gegenüber einer Kolbenfläche des Zylinders gleitfähig zu sein. Somit werden Reibungskräfte minimiert, um den Kräfteausgleich weiter zu verbessern.

In einer weiteren bevorzugten Ausführungsform weist das Betätigungsglied einen axial beweglichen stangenförmigen Körper auf und das Ausgleichselement umfaßt eine an dem Betätigungsglied angebrachte Kurvenscheibe, die gegenüber dem Betätigungsglied radial verschiebbar gelagert ist. Bei dieser Ausführungsform wird der Kräfteausgleich durch die radiale Verschiebung der Kurvenscheibe erzielt, die durch eine über das Betätigungsglied auf die Kurvenscheibe wirkende Kraft bewirkt wird.

In einer bevorzugten Ausführungsform weist das Betätigungsglied einen axial beweglichen stangenförmigen Körper auf und das Ausgleichselement umfaßt eine mittels eines Kardangelenks an dem Betätigungsglied angebrachte Kurvenscheibe. Bei dieser Ausführungsform wird der Kräfteausgleich durch die Gelenkigkeit des Kardangelenks bewirkt, d.h. die Kurvenscheibe des Ausgleichselements ist über das Kardangelenk radial verschiebbar, um den Kräfteausgleich zu bewirken.

Vorzugsweise weist die Kurvenscheibe eine im wesentlichen konische Steuerfläche auf, die einen Betätigungsabschnitt der Spannbacken betätigt.

Vorzugsweise ist ein Anschlagelement, beispielsweise in der Form einer Anschlaghülse vorgesehen für ein axiales Anlegen des Ausgleichselements bzw. der Taumelscheibe in einer offenen Stellung des Spannfutters, in der ein Werkstück freigegeben wird, um das Ausgleichselement in eine Ausgangslage zurückzubringen bzw. das Ausgleichselement zu zentrieren.

Das Anschlagelement und der Ausricht- und Zentrierkonus sorgen somit dafür, dass das Ausgleichselement und die Ausgleichsplatte, die in Abhängigkeit von der Form des Werkstücks in der geschlossenen Stellung des Spannfutters, in der das Werkstück gegriffen wird, mehr oder weniger geneigt sind, beim Öffnen des Spannfutters in eine nicht geneigte Stellung zurückkehren bzw. zentriert werden.

Erfindungsgemäß wird auch eine Spannvorrichtung zum zweiseitigen drehbaren Einspannen eines Werkstücks mit zwei Spannfuttern geschaffen, wobei zumindest eines der beiden Spannfutter ein erfindungsgemäßes Spannfutter umfasst. Die besten Bearbeitungsergebnisse werden erzielt wenn eines der beiden Spannfutter ein gewöhnliches Spannfutter und das andere Spannfutter ein erfindungsgemäßes Spannfutter ist, weil hierdurch ein Drehkörper bzw. ein zu bearbeitendes Werkstück zweiseitig gespannt werden kann ohne Verspannungen in das Werkstück einzuleiten. Dies ist insbesondere dann von Vorteil, wenn Verspannungen zu höheren Fertigungstoleranzen führen würden. In anderen Worten hat eine Einspannung mit der erfindungsgemäßen Spannvorrichtung den Vorteil, dass durch Verspannungen in einem Werkstück hervorgerufene Bearbeitungsfehler vermieden werden können.

Vorzugsweise wird das erfindungsgemäße Spannfutter oder die erfindungsgemäße Spannvorrichtung zum Einspannen eines Glases, insbesondere zum Abtrennen einer Blaskappe verwendet.

Die zwangskräftefreie Einspannung am Umfang einer Stirnseite B des Werkstücks erfolgt trotz einer Exzentrizität und Unrundheit des Werkstücks.

In einer zweiten Variante ermöglicht der Spanngreifmechanismus zusätzlich das koaxiale Trennen eines, dessen Spannumfangs-Mantellinien parallel zur Drehachse verlaufenden, Drehkörpers in zwei Teile, wenn dieser an seiner Mantellinie aufgeschnitten wird, ohne die das Trennen beeinflussenden Zwangskräfte.

In einer dritten Variante ermöglicht der Spanngreifmechanismus ebenfalls zusätzlich das koaxiale Trennen eines Drehkörpers, selbst wenn dessen Spannumfangs-Mantellinien nicht parallel zur Drehachse verlaufen und die Stirnfläche an der Stirnseite B keine ebene Fläche bildet und sich außerdem in einer von der Rechtwinkligkeit abweichenden Schieflage zur Drehachse befindet.

Erfindungsgemäß enthält der Spanngreifmechanismus als zentrales Element eine auf der Betätigungsstange sphärisch gelagerte Taumelscheibe, über deren Außennut, die in Ausschnitten des Greifergehäuses gelagerten, vorzugsweise drei Greif- oder Spannarme, betätigt werden.

Die Erfindung wird nachfolgend anhand begleitender Zeichnungen bevorzugter Ausführungsformen beispielshaft beschrieben.

### Es zeigen:

Fig.1 in einer Schnittdarstellung A-A den Spanngreifmechanismus des ersten Ausführungsbeispiels mit einem an seinem unteren Ende zentrisch eingespannten Drehkörper 1 (dargestellt als Stielglas mit Blaskappe), in oberer Ausgangsstellung über dem Drehkörper 1 mit geöffneten Greifarmen (Spannbacken) 2;
Fig.2 den Spanngreifmechanismus wie in Fig.1 in der zum Drehkörper abgesenkten Stellung mit geschlossenen Greifarmen 2;
Fig.3 den Spanngreifmechanismus wie in Fig.2 in angehobener Stellung mit eingespannter, vom Drehkörper 1 abgetrennten Oberteil (Blaskappe) 1A;
Fig. 4 eine Draufsicht auf den Spanngreifmechanismus ;
Fig.5 eine Schnittdarstellung einer Greifarmlagerung;
Fig. 6A ein zweites Ausführungsbeispiel mit einem pneumatischen/hydraulischen Zylinder als ein Ausgleichselement;
Fig. 6B einen Schnitt durch die Schwenkachse des Hebels beim zweiten Ausführungsbeispiel;
Fig. 7 ein drittes Ausführungsbeispiel mit einer radial verschiebbar gelagerten Kurvenscheibe als Ausgleichselement; und
Fig. 8 ein viertes Ausführungsbeispiel mit einer kardanisch aufgehängten Kurvenscheibe als Ausgleichselement.

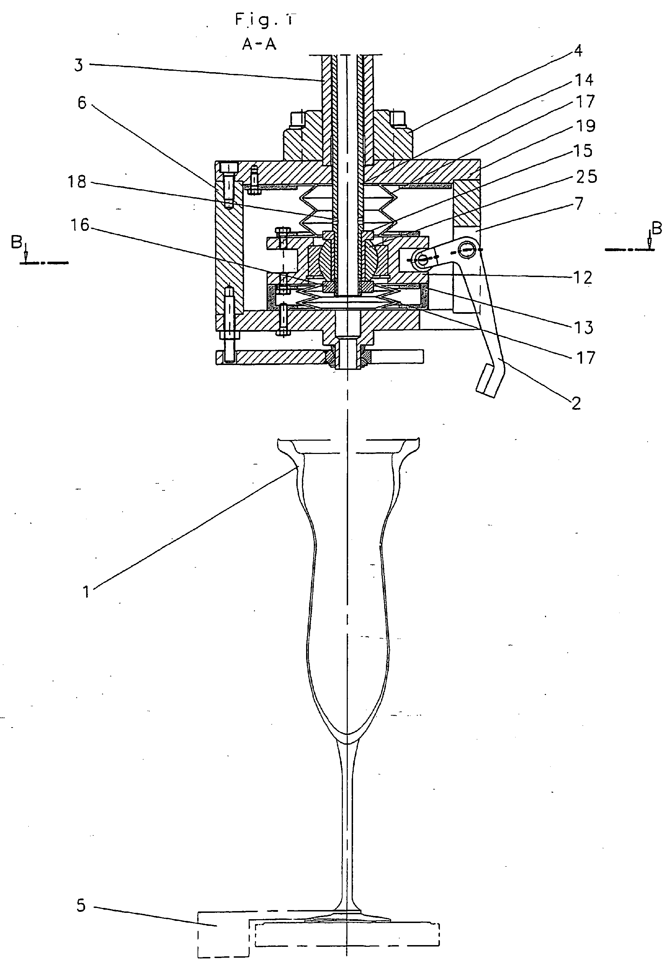

In der in Fig.1 gezeigten Ausgangsstellung des Spanngreifmechanismusses des ersten Ausführungsbeispiels hängt am unteren Ende, einer vorzugsweise vertikal bewegbaren Haltehohlstange 3 und geklemmt über den, mit der Gehäusedeckplatte 19 verschraubten Klemmflansch 4, der Spanngreifmechanismus bzw. das Spannfutter 6 über dem, bereits an seinem unteren Ende über ein herkömmliches Spannfutter 5 zentrisch geklemmten, Drehkörper 1. Die Drehachsen des Spanngreifmechanismus 6 und des unteren Spannfutters 5 liegen koaxial zueinander.

Der in der Ausgangsstellung vertikale Abstand des Spanngreifmechanismus 6 zum oberen Ende des Drehkörpers 1 wird bestimmt durch den für das Beladen des Drehkörpers 1 erforderlichen Freigang zwischen dem Spanngreifmechanismus 6 und dem unteren Spannfutter 5.

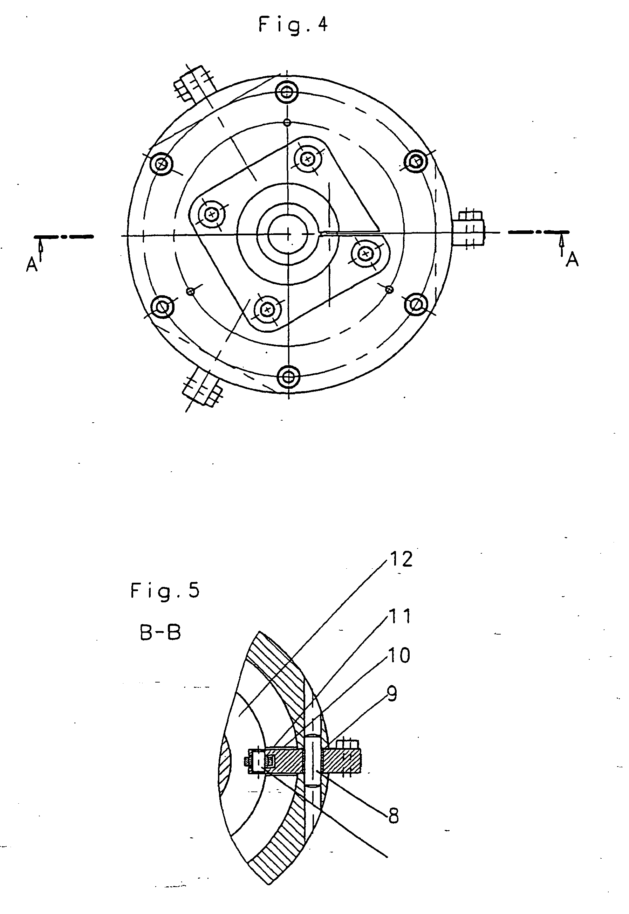

Die im Futtergehäuse 6 in je einem Gehäuseausschnitt 7 mittels, in Fig.5 ersichtlichen, Lagerbolzen 8 und Buchse 9, gelagerten Greifarme 2 sind konzentrisch geöffnet. Bewirkt wird dies dadurch, dass die winkelhebelartig ausgebildeten Greifarme 2 über die als Betätigungsrollen dienenden Außenringe 10 der sphärischen Klein-Gleitlager 11, dargestellt in Fig.5, in die Ringnut der Taumelscheibe 12 eingreifen und diese sich in der unteren Stellung an der Anschlaghülse 13, dargestellt in Fig.1, in die Horizontale ausrichtet.

Die Schließbewegung der Greifarme 2 erfolgt durch die Hubbewegung der in der Haltehohlstange 3 geführten Betätigungsstange 14, auf der die Taumelscheibe 12, über ein Gelenklager 25 sphärisch gelagert und mittels Bundbuchse 15 und Mutter 16, befestigt ist. Je ein unterer und oberer Faltenbalg 17 dichten den Lagerungsbereich der Taumelscheibe 12, gegen Umgebungseinwirkungen ab. Um ein Atmen bzw. einen Druckausgleich der Faltenbälge 17 während der Hubbewegung zu ermöglichen, sind in der hohl ausgebildeten Betätigungsstange 14 Luftausgleichslöcher 18 ausgebildet, beispielsweise durch Bohren.

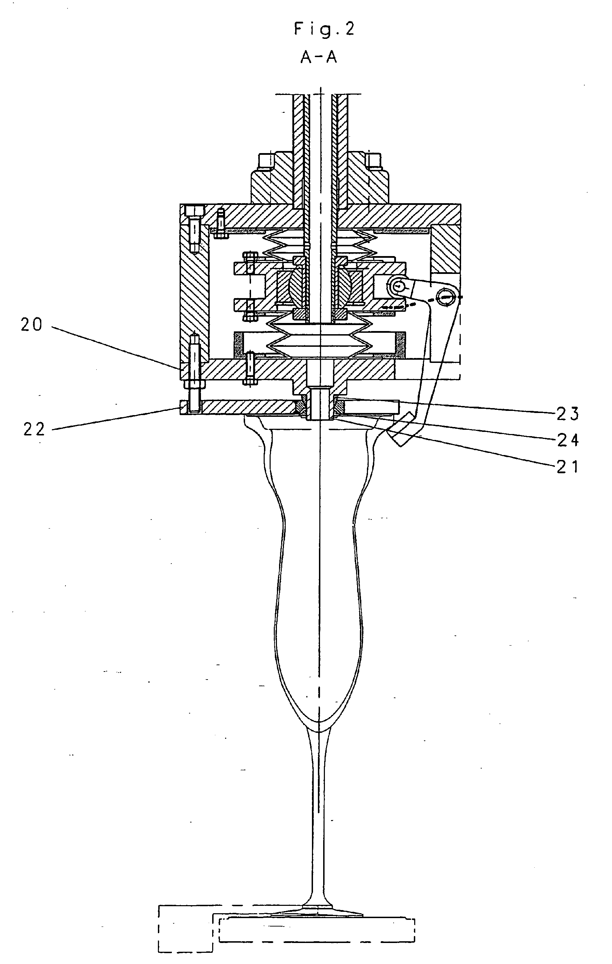

Fig.2 zeigt, wie sich im weiteren Ablauf der Spanngreifmechanismus auf die obere, eventuell auch zur Drehachse rechtwinklig schief gestellten und unebenen, Stirnseite des zu spannenden Drehkörpers 1, senkt. Die Senklast auf den Drehkörper 1 wird durch einen, hier nicht näher beschriebenen, Gewichtsausgleich eingestellt. Der stirnseitige Kontakt erfolgt durch eine Ausgleichsplatte 22, die über einen unten liegenden Ausricht- und Zentrierkonus 24 aufgehängt ist. Darüber hinaus ist die Ausgleichsplatte 22 oberseitig mit einem sphärischen Drucklager 23 ausgestattet, vorzugsweise sternförmig gestaltet und an einem Zapfen 21 befestigt. Dieser Zapfen 21 ist an einer Unterseite bzw. einer axialen Endseite des Spanngreifmechanismusses bzw. Spannfutters angeordnet, vorzugsweise an einem unterseitigen Gehäusedeckel 20 angeschraubt. Die Ausgleichsplatte 22 befindet sich durch den unterseitigen Ausricht- und Zentrierkonus 24, zum Ersten, in einer zentrischen und horizontalen Ausgangslage und kann sich durch die oberseitige sphärische Lagerung, zum Zweiten, beim weiteren Absenken und Aufsetzen, auf die Stirnseite des Drehkörpers 1, dem Drehkörper 1 lagemäßig anpassen bzw. durch die Oberseite des Drehkörpers 1 über die oben genannte sphärische Lagerung ausgerichtet werden. Die Greifarme 2 passen sich ebenfalls durch die Ausgleichsbewegung der Taumelscheibe 12 der Drehkörperkontur an bzw. werden über die ebenfalls sphärische Lagerung der Taumelscheibe 12 ausgerichtet, so dass die Greifarme 2 den Drehkörper 1 zwangskräftefrei gegen die Ausgleichsplatte 22 pressen.

In anderen Worten wird der Drehkörper 1 gleichmäßig gegen die Ausgleichsplatte gedrückt, so dass jeder Greifarm 2 im wesentlichen dieselbe Kraft in den Drehkörper einleitet. Hierdurch wird eine ungleichmäßige Spannungsverteilung in dem Drehkörper 1 vermieden. Aufgrund der Neigungsfähigkeit der Taumelscheibe 12 wird auch dann eine gleichmäßige Krafteinleitung gewährleistet, wenn die durch die Greifarme 2 geklemmten Abschnitte des Drehkörpers 1 aufgrund von Fertigungstoleranzen unterschiedliche Abmessungen haben. Auf dieselbe Weise kann die Ausgleichsplatte 22 Fertigungstoleranzen einer oberen Stirnseite des Drehkörpers 1 aufgrund ihrer Neigungsfähigkeit ausgleichen.

Da das untere Spannfutter 5 und der obere Spanngreifmechanismus, durch einen hier nicht näher beschriebenen Antrieb, drehsynchron miteinander gekoppelt sind, kann der Drehkörper 1 zu seiner peripheren Bearbeitung in Drehung versetzt werden.

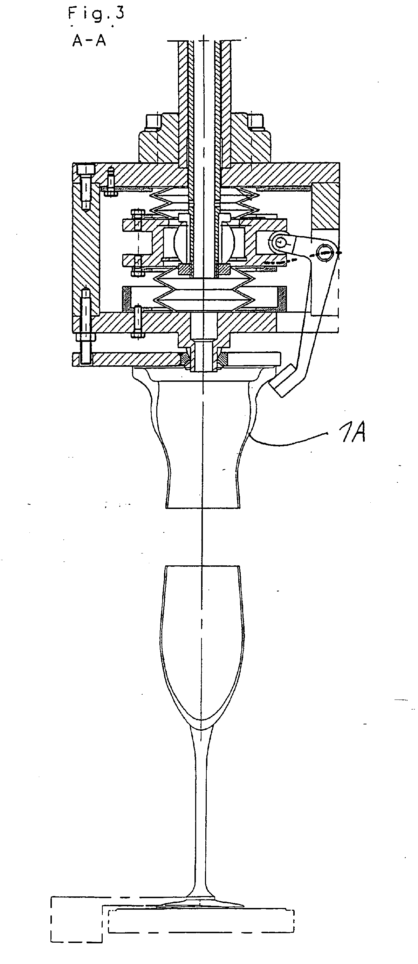

Wie in Fig.3 dargestellt erfolgt nun beispielsweise bei einem Stielglas das Abtrennen der Blaskappe 1A durch am Umfang einwirkende Wärmequellen, wobei die abzutrennende Blaskappe koaxial und zwangskräftefrei allmählich, im Einklang mit den Wärmequellen, von dem, auf dem unteren Spannfutter 5 verbleibenden Trinkglas mit Stiel, getrennt und angehoben wird. Gerade am Beispiel des sehr empfindlich auf Spannungen reagierenden Glases wird die erfindungsgemäße Arbeitsweise deutlich.

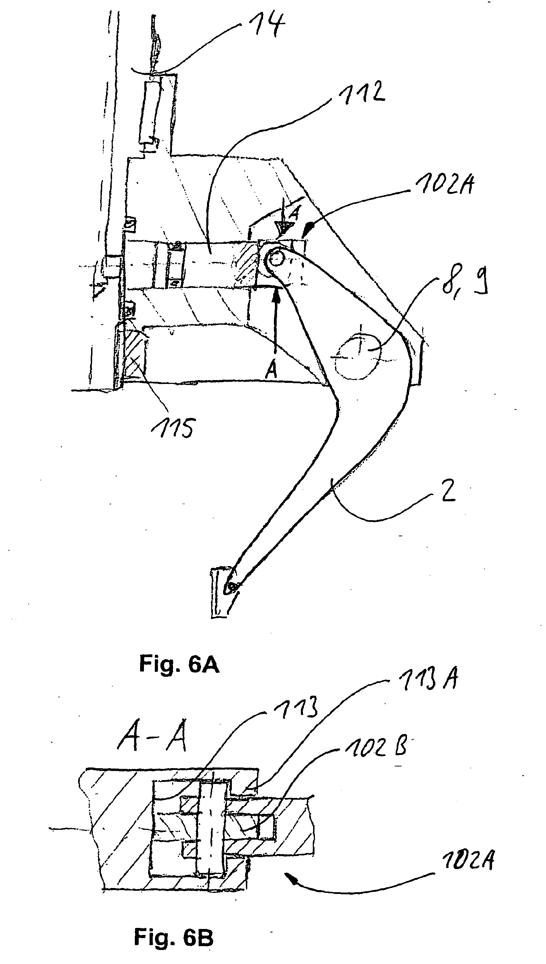

Fig. 6A und 6B zeigen eine Detailansicht eines zweiten Ausführungsbeispiels, das im wesentlichen wie das erste Ausführungsbeispiel aufgebaut ist. Es werden deshalb nur die Unterschiede zu dem ersten Ausführungsbeispiele erläutert, während auf eine Wiederholung derselben Merkmale verzichtet wird.

In dem zweiten Ausführungsbeispiel wird an Stelle der Taumelscheibe eine Vielzahl von pneumatischen bzw. hydraulischen Zylindern 112 eingesetzt. In anderen Worten wird ein Betätigungsabschnitt 102A der Greifarme 2 jeweils durch einen Zylinder 112 betätigt. Da alle Zylinder 112 mit demselben Druck beaufschlagt werden, wirkt jeweils dieselbe Kraft auf die Betätigungsabschnitte 102A der Greifarme 2, so dass ein Kräfteausgleich bewirkt wird. Dabei weist eine vordere Kolbenfläche 113, die mit dem Betätigungsabschnitt 102A in Kontakt tritt, vorzugsweise eine Kulisse 113A auf, um zu ermöglichen, dass der Kolben des Zylinders 112 den Betätigungsabschnitt 102A auch zurückziehen kann, wenn der Zylinder 112 mit Unterdruck versorgt wird.

Des weiteren ist der Betätigungsabschnitt vorzugsweise mit einer Gleiteinrichtung 102B, wie beispielsweise einer Rolle bzw. Walze versehen, um ein reibungsarmes Gleiten zu ermöglichen.

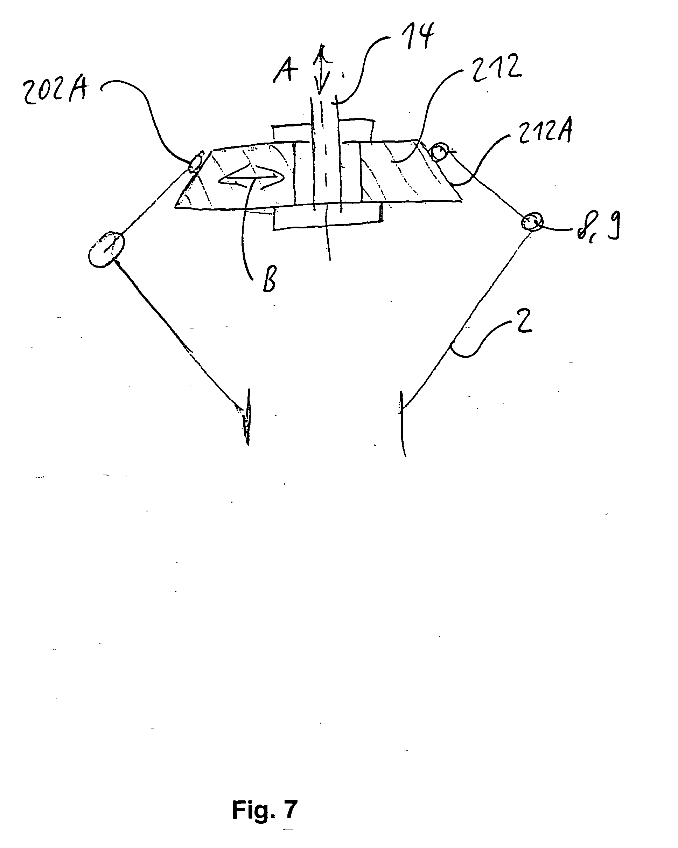

Fig. 7 zeigt eine Detailansicht eines dritten Ausführungsbeispiels, das im wesentlichen wie das erste Ausführungsbeispiel aufgebaut ist. Es werden deshalb nur die Unterschiede zu dem ersten Ausführungsbeispiele erläutert, während auf eine Wiederholung derselben Merkmale verzichtet wird.

Bei dem dritten Ausführungsbeispiel wird an Stelle der Taumelscheibe eine Kurvenscheibe 212 eingesetzt, die eine Steuerfläche 212A aufweist, auf der ein Betätigungsabschnitt 202A der Greifarme 2 gleiten kann, um eine Bewegung der Greifarme 2 zu steuern bzw. zu bewirken. Dabei ist die Kurvenscheibe 212 in einer radialen Richtung beweglich gelagert, so dass ein Kräfteausgleich stattfinden kann.

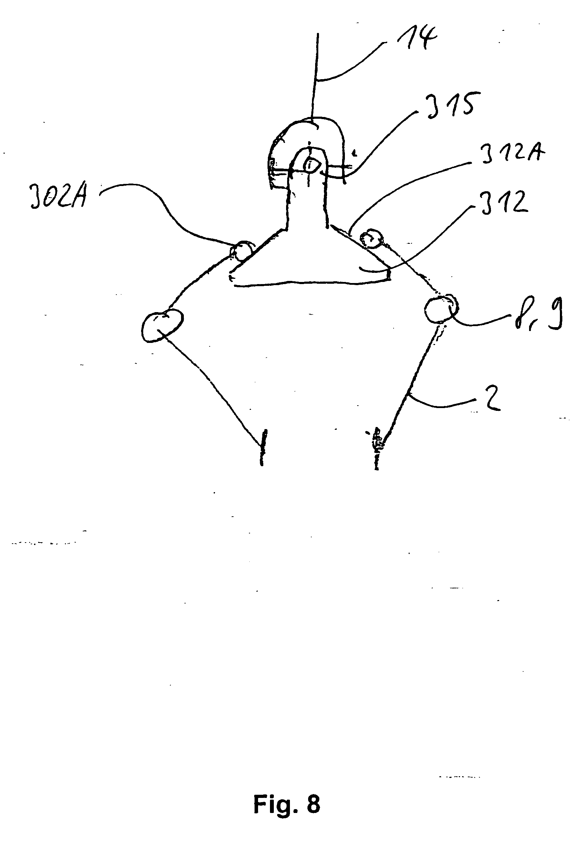

Fig. 8 zeigt eine Detailansicht eines vierten Ausführungsbeispiels, das im wesentlichen wie das dritte Ausführungsbeispiel aufgebaut ist. Es werden deshalb nur die Unterschiede zu dem dritten Ausführungsbeispiele erläutert, während auf eine Wiederholung derselben Merkmale verzichtet wird.

Bei dem vierten Ausführungsbeispiel ist die Kurvenscheibe 312 kardanisch an der Betätigungsstange 14 angelenkt, so dass der Kräfteausgleich über das Kardangelenk 315 erfolgen kann.

Die Steuerfläche 212A, 312A der Kurvenscheibe 212, 312 des dritten und vierten Ausführungsbeispiels ist vorzugsweise konisch ausgebildet. Es ist jedoch auch eine ballige, konvexe, konkave oder jede beliebige andere Kontur möglich, um den Kräfteverlauf an den Greifarmen 2 beim Betätigen der Betätigungsstange zu optimieren.

Die vorstehenden Ausführungsbeispiele können beliebig miteinander kombiniert werden. Beispielsweise können das dritte und vierte Ausführungsbeispiel wie das erste und zweite Ausführungsbeispiel eine Gleiteinrichtung, Rolle bzw. Walze an dem Betätigungsabschnitt der Greifarme 2 aufweisen. Darüber hinaus können das dritte und vierte Ausführungsbeispiel (obwohl es in den Figuren nicht gezeigt ist) auch eine Kulisse aufweisen, die den Betätigungsabschnitt der Greifarme 2 so bewegt, dass die Greifarme 2 geöffnet werden. Des weiteren ist es möglich, das Kardangelenk des vierten Ausführungsbeispiels bei den anderen Ausführungsbeispielen zusätzlich anzuordnen, um einen noch besseren Kräfteausgleich zu bewirken.

Das erfindungsgemäße Spannfutter wird bevorzugt in der Glasbearbeitung zum Abtrennen einer Glaskappe verwendet. Es sind jedoch auch andere Verwendungen möglich, insbesondere als Spannfutter für eine Drehbank oder eine Fräsmaschine oder eine andere Vorrichtung, in der ein Werkstück drehend zentriert eingespannt werden soll.

Im Falle des mit den Zylindern 112 versehenen Spannfutters des zweiten Ausführungsbeispiels ist es dabei vorteilhaft, wenn jeder Zylinder 112 ein (in den Figuren nicht gezeigtes) Absperrorgan wie beispielsweise ein Magnetventil aufweist, um das Fluid in dem Zylinder 112 nach dem Einspannen eines Werkstücks abzusperren. Auf diese Weise ist nach dem Zentrieren des Werkstücks über den Kräfteausgleich kein weiterer Kräfteausgleich zwischen den Greifarmen 2 mehr möglich, so dass das Werkstück beispielsweise bei der spanenden Bearbeitung in einer Drehbank auf sichere Weise präzise und zentriert gehalten werden kann.

In anderen Worten wird ein Werkstück in das Spannfutter des zweiten Ausführungsbeispiels eingespannt indem alle Zylinder 112 mit demselben Druck beaufschlagt werden. Hierdurch werden alle Greifarme 2 mit derselben Kraft betätigt, um das Werkstück gleichmäßig zu spannen. Danach wird der Druck in den Zylindern über die Magnetventile abgesperrt, so daß kein Fluid aus den Zylindern 112 entweichen kann. Hierdurch wird ein weiterer Kräfteausgleich verhindert. Infolgedessen wird ein Werkstück insbesondere bei der spanenden Bearbeitung, bei der hohe Radialkräfte am Umfang auftreten auf sichere Weise präzise gehalten, so dass eine präzise Bearbeitung erfolgen kann.

### Bezugszeichenliste

1 Drehkörper
1A Blaskappe
2 Greifarme
2A Betätigungsabschnitt
3 Haltehohlstange
4 Klemmflansch
5 Spannfutter
6 Futtergehäuse
7 Gehäuseausschnitt
8 Lagerbolzen
9 Buchse
10 Außenringe
11 Klein-Gleitlager
12 Taumelscheibe
13 Anschlaghülse
14 Betätigungsstange
15 Bundbuchse
16 Mutter
17 oberer und unterer Faltenbalg
18 Luftausgleichslöcher
19 Gehäusedeckplatte
20 unterseitige Gehäusedeckel
21 Zapfen
22 Ausgleichsplatte
23 sphärisches Drucklager
24 Ausricht- und Zentrierkonus
25 Kugelgelenk
102A Betätigungsabschnitt
102B Gleiteinrichtung
112 Zylinder
113 Kolbenfläche
113A Kulisse
115 Wellenmutter
202A Betätigungsabschnitt
212 Kurvenscheibe
212A Steuerfläche
302A Betätigungsabschnitt
312 Kurvenscheibe
312A Steuerfläche
315 Kardangelenk

## Patentansprüche

1. Spannfutter zum drehbaren Einspannen eines Werkstücks (1) mit einer Vielzahl von Spannbacken (2), die zum Anziehen des Spannfutters mit einem Betätigungsglied (14) wirkverbunden sind, wobei ein Ausgleichselement (12) zwischen die Spannbacken (2) und das Betätigungsglied (14) zum Kräfteausgleich zwischengesetzt ist, so dass die Spannbacken (2) mit im wesentlichen derselben Kraft auf das Werkstück (1) einwirken,
**dadurch gekennzeichnet, dass**
an einem axialen Ende des Spannfutters eine Ausgleichsplatte (22) zum axialen Anlegen eines Werkstücks (1) angeordnet ist, wobei die Ausgleichsplatte (22) um einen vorgegebenen Winkel schwenkbar angeordnet ist, um Fertigungstoleranzen einer axialen Anlagefläche des Werkstücks (1) auszugleichen, und
die Ausgleichsplatte (22) über einen unten liegenden Ausricht- und Zentrierkonus (24) aufgehängt ist und oberseitig mit einem sphärischen Drucklager (23) versehen ist, so dass die Ausgleichsplatte (22) in der offenen Stellung des Spannfutters sich über ihre Gewichtskraft an dem Ausricht- und Zentrierkonus (24) selbsttätig zentriert und in ihre-Ausgangslage zurückkehrt.

2. Spannfutter nach Anspruch 1, wobei das Betätigungsglied (14) einen stangenförmigen Körper aufweist und das Ausgleichselement (12) eine an dem Betätigungsglied (14) angebrachte Taumelscheibe aufweist, die gegenüber dem Betätigungsglied (14) um einen vorgegebenen Winkel schwenkbar ist.

3. Spannfutter nach Anspruch 1 oder 2, wobei das Betätigungsglied (14) zum Anziehen des Spannfutters axial bewegbar ist, um einen Betätigungsabschnitt (2A) der Spannbacken (2) im wesentlichen in einer axialen Richtung zu bewegen.

4. Spannfutter nach einem der vorherigen Ansprüche, wobei ein Betätigungsabschnitt (2A) der Spannbacken (2) in einer radialen Nut des Ausgleichselements (12) geführt ist.

5. Spannfutter nach einem der Ansprüche 2 bis 4, wobei die Taumelscheibe (12) über ein Kugelgelenk (25) an dem Betätigungsglied (14) koaxial gelagert ist.

6. Spannfutter nach einem der vorherigen Ansprüche, wobei eine Lagerung des Ausgleichselements (12) abgedichtet ist, vorzugsweise über einen Faltenbalg (17).

7. Spannfutter nach Anspruch 1, wobei das Ausgleichselement eine Vielzahl von pneumatischen oder hydraulischen Zylindern (112) aufweist, die konfiguriert sind, um jeweils einen Betätigungsabschnitt (102A) der Spannbacken (2) mit demselben Druck zu beaufschlagen, so daß jeder Betätigungsabschnitt (102A) mit derselben Kraft betätigbar ist.

8. Spannfutter nach Anspruch 7, wobei jeder Zylinder (112) getrennt absperrbar ist, um einen Druckausgleich zwischen den Zylindern (112) zu verhindern.

9. Spannfutter nach Anspruch 7 oder 8, wobei der Betätigungsabschnitt (102A) der Spannbacken jeweils eine Gleiteinrichtung (102B), vorzugsweise in der Gestalt einer Rolle, aufweist, um gegenüber einer Kolbenfläche (113) des Zylinders (112) gleitfähig zu sein.

10. Spannfutter nach Anspruch 1, wobei das Betätigungsglied (14) einen axial beweglichen stangenförmigen Körper aufweist und das Ausgleichselement eine an dem Betätigungsglied (14) angebrachte Kurvenscheibe (212) aufweist, die gegenüber dem Betätigungsglied (14) radial verschiebbar gelagert ist.

11. Spannfutter nach Anspruch 1, wobei das Betätigungsglied (14) einen axial beweglichen stangenförmigen Körper aufweist und das Ausgleichselement eine mittels eines Kardangelenks (315) an dem Betätigungsglied (14) angebrachte Kurvenscheibe (312) aufweist.

12. Spannfutter nach Anspruch 10, wobei die Kurvenscheibe (212; 312) eine im wesentlichen konische Steuerfläche (212A; 312A) aufweist, die einen Betätigungsabschnitt (202A; 302A) der Spannbacken betätigt.

13. Spannfutter nach einem der vorherigen Ansprüche, wobei die Spannbacken (2) einen am Umfang des Spannfutters schwenkbar gelagerten Hebel aufweisen, dessen Schwenkachse (8) im wesentlichen tangential zu dem Spannfutter angeordnet ist.

14. Spannfutter nach einem der vorherigen Ansprüche, wobei ein Anschlagelement (13) vorgesehen ist für ein axiales Anlegen des Ausgleichselements (12) in einer offenen Stellung des Spannfutters, in der ein Werkstück (1) freigegeben wird, um das Ausgleichselement (12) in eine Ausgangslage zurückzubringen.

15. Spannvorrichtung zum zweiseitigen drehbaren Einspannen eines Werkstücks (1) mit zwei Spannfuttern (5, 6), wobei zumindest eines der beiden Spannfutter (6) ein Spannfutter nach den Ansprüchen 1 bis 14 umfasst.

16. Verwendung eines Spannfutters nach den Ansprüchen 1 bis 14 oder einer Spannvorrichtung nach Anspruch 15 zum Einspannen eines Glases (1), insbesondere zum Abtrennen einer Blaskappe (1A).

17. Verwendung eines Spannfutters nach den Ansprüchen 1 bis 14 in einer Drehbank oder einer Fräsmaschine.

## Claims

1. A chuck for rotatably clamping a workpiece (1) with a plurality of clamping jaws (2), which are operatively connected to an actuation member (14) to tighten the chuck, wherein a balancing element (12) is interposed between the clamping jaws (2) and the actuation member (14) for force balancing, so that the clamping jaws (2) act on the workpiece (1) with substantially the same force,
**characterized in that**
at an axial end of the chuck there is arranged a balancing plate (22) for axially applying a workpiece (1), wherein the balancing plate (22) is arranged so as to be pivotable by a predetermined angle to compensate for manufacturing tolerances of an axial application surface of the workpiece (1), and
the balancing plate (22) is suspended via a bottom alignment and centration cone (24) and is provided with a spherical thrust bearing (23) at a top side, so that the balancing plate (22) in the open position of the chuck centers automatically at the alignment and centration cone (24) by its weight and returns to its initial position.

2. The chuck according to claim 1, wherein the actuation member (14) has a rod-shaped body and the balancing element (12) has a swash plate attached to the actuation member (14), which is pivotable by a predetermined angle with respect to the actuation member (14).

3. The chuck according to claim 1 or 2, wherein the actuation member (14) is axially movable to tighten the chuck, in order to move an actuation portion (2A) of the clamping jaws (2) substantially in an axial direction.

4. The chuck according to one of the preceding claims, wherein an actuation portion (2A) of the clamping jaws (2) is guided in a radial groove of the balancing element (12).

5. The chuck according to one of claims 2 to 4, wherein the swash plate (12) is coaxially supported on the actuation member (14) via a ball joint (25)

6. The chuck according to one of the preceding claims, wherein a bearing of the balancing element (12) is sealed, preferably via a bellows (17).

7. The chuck according to claim 1, wherein the balancing element has a plurality of pneumatic or hydraulic cylinders (112) configured to each apply the same pressure to an actuation portion (102A) of the clamping jaws (2), so that each actuation portion (1 02A) can be actuated with the same pressure.

8. The chuck according to claim 7, wherein each cylinder (112) can be shut off separately in order to prevent a balancing of pressure between the cylinders (112).

9. The chuck according to claim 7 or 8, wherein the actuation portion (102A) of the clamping jaws each has a sliding device (102B), preferably in the form of a roller, to be slidable with respect to a piston area (113) of the cylinder (112).

10. The chuck according to claim 1, wherein the actuation member (14) has an axially movable, rod-shaped body and the balancing element has a cam disk (212) attached to the actuation member (14), which is supported so as to be radially displaceable with respect to the actuation member (14).

11. The chuck according to claim 1, wherein the actuation member (14) has an axially movable, rod-shaped body and the balancing element has a cam disk (312) attached to the actuation member (14) by means of a universal joint (315).

12. The chuck according to claim 10, wherein the cam disk (212; 312) has a substantially conical control surface (212A; 312A), which actuates an actuation portion (202A; 302A) of the clamping jaws.

13. The chuck according to one of the preceding claims, wherein the clamping jaws (2) have a lever that is pivotally supported on the circumference of the chuck, the pivot axis (8) of the lever being disposed substantially tangentially with respect to the chuck.

14. The chuck according to one of the preceding claims, wherein a stop element (13) is provided for an axial application of the balancing element (12) in an open position of the chuck, in which a workpiece (1) is released to return the balancing element (12) to an initial position.

15. A clamping device for a two-sided rotatable clamping of a workpiece (1) with two chucks (5, 6), wherein at least one of the two chucks (6) comprises a chuck according to claims 1 to 14.

16. A use of a chuck according to claims 1 to 14 or of a clamping device according to claim 15 for clamping a glass (1), in particular for cutting of a blowing cap (1A).

17. A use of a chuck according to claims 1 to 14 in a lathe or a milling machine.

## Revendications

1. Mandrin de serrage destiné à serrer une pièce (1), dans un mouvement de rotation, avec plusieurs mâchoires de serrage (2), qui sont reliées à un élément d'actionnement (14) destiné à serrer le mandrin de serrage, où un élément d'équilibrage (12) est interposé entre les mâchoires de serrage (2) et l'élément d'actionnement (14) afin d'équilibrer les forces, de sorte que les mâchoires de serrage (2) exercent une force essentiellement identique sur la pièce (1), **caractérisé en ce qu'**à une extrémité axiale du mandrin de serrage, une plaque d'équilibrage (22) est placée pour poser une pièce (1) axialement, cette plaque d'équilibrage (22) étant placée en pivot dans un angle prédéterminé, afin d'équilibrer les tolérances de fabrication d'un moyeu axial de la pièce (1), et
la plaque d'équilibrage (22) est accrochée au-dessus d'un cône d'alignement et de centrage (24), et est dotée sur sa face supérieure d'une butée sphérique (23), de sorte que la plaque d'équilibrage (22), dans la position ouverte du mandrin de serrage, se centre automatiquement sous l'effet de son poids sur le cône d'alignement et de centrage (24), et retourne dans sa position de repos.

2. Mandrin de serrage selon la revendication 1, dans lequel l'élément d'actionnement (14) présente un corps en forme de barre et l'élément d'équilibrage (12) présente un plateau oscillant placé sur l'élément d'actionnement (14), qui peut pivoter dans un angle prédéfini par rapport à l'élément d'actionnement (14).

3. Mandrin de serrage selon la revendication 1 ou 2, dans lequel l'élément d'actionnement (14) est mobile axialement pour serrer le mandrin de serrage, afin de déplacer un segment d'actionnement (2A) des mâchoires de serrage (2) essentiellement dans une direction axiale.

4. Mandrin de serrage selon l'une quelconque des revendications précédentes, dans lequel un segment d'actionnement (2A) des mâchoires de serrage (2) est guidé dans une rainure radiale de l'élément d'équilibrage (12).

5. Mandrin de serrage selon l'une quelconque des revendications 2 à 4, dans lequel le plateau oscillant (12) est relié coaxiale ment à l'élément d'actionnement (14) par le biais d'un joint à rotule (25).

6. Mandrin de serrage selon l'une quelconque des revendications précédentes, dans lequel un palier de l'élément d'équilibrage (12) est colmaté, de préférence à l'aide d'un soufflet d'intercirculation (17).

7. Mandrin de serrage selon la revendication 1, dans lequel l'élément d'équilibrage présente plusieurs cylindres pneumatiques ou hydrauliques (112), qui sont configurés de manière à exercer à chaque fois la même pression sur un segment d'actionnement (1 02A) des mâchoires de serrage (2), de sorte que chaque segment d'actionnement (102A) puisse être actionné avec la même force.

8. Mandrin de serrage selon la revendication 7, dans lequel chaque cylindre (112) peut être verrouillé séparément afin d'éviter un équilibrage de la pression entre les cylindres (112).

9. Mandrin de serrage selon la revendication 7 ou 8, dans lequel le segment d'actionnement (1 02A) des mâchoires de serrage présente à chaque fois un dispositif de glissement (102B), de préférence sous la forme d'un rouleau, afin de pouvoir glisser face à une surface du piston (113) du cylindre (112).

10. Mandrin de serrage selon la revendication 1, dans lequel l'élément d'actionnement (14) présente un corps en forme de barre mobile axialement et l'élément d'équilibrage présente une came (212) appliquée sur l'élément d'actionnement (14), qui est placée en face de l'élément d'actionnement (14) et peut être ajustée radialement.

11. Mandrin de serrage selon la revendication 1, dans lequel l'élément d'actionnement (14) présente un corps en forme de barre mobile sur un plan axial et où l'élément d'équilibrage présente une came (312) appliquée à l'élément d'actionnement (14) moyennant un joint de cardan (315).

12. Mandrin de serrage selon la revendication 10, dans lequel la came (212; 312) présente une surface de commande essentiellement conique (212A; 312A) qui actionne une partie (202A ; 302 A) des mâchoires de serrage.

13. Mandrin de serrage selon l'une quelconque des revendications précédentes, dans lequel les mâchoires de serrage (2) présentent autour du mandrin de serrage un levier placé de manière à pouvoir pivoter, dont l'axe de pivotement (8) est essentiellement orienté dans un plan tangentiel par rapport au mandrin de serrage.

14. Mandrin de serrage selon l'une quelconque des revendications précédentes, dans lequel un élément de butée (13) est prévu pour une pose axiale de l'élément d'équilibrage (12), dans une position ouverte du mandrin de serrage, dans laquelle une pièce (1) est débloquée, afin de remettre l'élément d'équilibrage (12) dans une position de repos.

15. Dispositif de serrage pour serrer une pièce (1) sur les deux faces et en tournant avec deux mandrins de serrage (5, 6), dans lequel au moins un des deux mandrins de serrage (6) comprend un mandrin de serrage selon les revendications 1 à 14.

16. Utilisation d'un mandrin de serrage selon les revendications 1 à 14 ou un dispositif de serrage selon la revendication 15 pour serrer un verre (1), en particulier pour le détachage d'un soufflage au mince (1A).

17. Utilisation d'un mandrin de serrage selon les revendications 1 à 14 dans un tour ou une fraiseuse.
